(19) Europäisches Patentamt
European Patent Office
Office européen des brevets

(11) **EP 1 550 015 B1**

(12) **EUROPÄISCHE PATENTSCHRIFT**

(45) Veröffentlichungstag und Bekanntmachung des Hinweises auf die Patenterteilung:
**17.12.2008 Patentblatt 2008/51**

(21) Anmeldenummer: **03753453.4**

(22) Anmeldetag: **25.09.2003**

(51) Int Cl.:
***G05B 11/32*** *(2006.01)*

(86) Internationale Anmeldenummer:
**PCT/EP2003/010651**

(87) Internationale Veröffentlichungsnummer:
**WO 2004/034162 (22.04.2004 Gazette 2004/17)**

(54) **MEHRGRÖSSENREGELUNGSSYSTEM UND VERFAHREN ZUM REGELN EINER MEHRGRÖSSENREGELSTRECKE**

MULTIVALUE CONTROL SYSTEM AND METHOD FOR CONTROLLING A MULTIVALUE CONTROLLED SYSTEM

SYSTEME DE REGULATION DE PLUSIEURS GRANDEURS ET PROCEDE POUR REGULER UN SYSTEME DONT PLUSIEURS GRANDEURS DOIVENT ETRE REGULEES

(84) Benannte Vertragsstaaten:
**DE ES FR GB IT**

(30) Priorität: **08.10.2002 DE 10246910**

(43) Veröffentlichungstag der Anmeldung:
**06.07.2005 Patentblatt 2005/27**

(73) Patentinhaber: **MTU Aero Engines GmbH**
**80995 München (DE)**

(72) Erfinder: **LIETZAU, Klaus**
**85757 Karlsfeld (DE)**

(56) Entgegenhaltungen:
WO-A-00/22487      WO-A-01/79942
WO-A-97/20734      US-A- 5 403 074

- **TOLLE H ET AL: "QUERPROFILREGELUNG IN DER PAPIERINDUSTRIE - SENSOREN UND AKTUATOREN ALS BESTIMMENDE ELEMENTE DER REGELGUETE" AUTOMATISIERUNGSTECHNIK - AT, OLDENBOURG VERLAG. MUNCHEN, DE, Bd. 45, Nr. 6, 1. Juni 1997 (1997-06-01), Seiten 271-281, XP000691798 ISSN: 0178-2312**
- **WADE H L: "INVERTED DECOUPLING: A NEGLECTED TECHNIQUE" ADVANCES IN INSTRUMENTATION AND CONTROL, INSTRUMENT SOCIETY OF AMERICA, RESEARCH TRIANGLE PARK, US, Bd. 51, Nr. PART 1, 1996, Seiten 357-369, XP000640494 ISSN: 1054-0032**

**Beschreibung**

Die Erfindung betrifft ein Mehrgrößenregelungssystem gemäß dem Oberbegriff des Patentanspruchs 1. Des weiteren betrifft die Erfindung ein Verfahren zum Regeln einer Mehrgrößenregelstrecke gemäß dem Oberbegriff des Patentanspruchs 7 und ein Verfahren zum Regeln eines Propellertriebwerks gemäß dem Oberbegriff des Patentanspruchs 12.

Ausgangspunkt für die Regelungstechnik oder eine Regelungsaufgabe ist eine Anlage bzw. Einrichtung, für welche eine zeitveränderliche Größe in bestimmter Weise beeinflusst werden soll. Die zu regelnde Größe bezeichnet man als Regelgröße, die gegebene Anlage bzw. Einrichtung als Regelstrecke. Die Regelgröße ist eine Ausgangsgröße der Regelstrecke und einen gemessenen Wert der Regelgröße bezeichnet man als Istwert derselben. Die Regelgröße soll so beeinflusst werden, dass die Regelgröße einer gewünschten Größe entspricht, die als Sollwert bezeichnet wird. Der tatsächliche Istwert der Regelgröße wird mit dem gewünschten Sollwert verglichen, wobei die entsprechende Abweichung - eine sogenannte Regeldifferenz - einem Regler zugeführt wird. Auf Basis der Regeldifferenz erzeugt der Regler eine Stellgröße zur Beeinflussung der Regelstrecke, wobei die Stellgröße eine Eingangsgröße der Regelstrecke ist.

Es sind häufig Regelstrecken zu regeln, in denen mehrere zeitveränderliche Größen - also mehrere Regelgrößen - beeinflusst und damit geregelt werden sollen. Solche Regelstrecken bezeichnet man als Mehrgrößenregelstrecke oder auch Mehrfachregelstrecke. Beispiele für solche Mehrgrößenregelungsaufgaben sind:

- Propellertriebwerke wie zum Beispiel Turboprop-Triebwerke für Luftfahrzeuge, bei welchen Drehzahl und Leistung eines Propellers geregelt werden sollen,
- Destillationskolonnen, bei welchen Flüssigkeitsstand und Temperaturen in Sumpf und Kopf der Kolonne geregelt werden sollen, oder
- Klimaregelungen, bei welchen Temperatur und Feuchtigkeit eines Raums zu regeln sind.

Die vorliegende Erfindung betrifft solche Mehrgrößenregelungssysteme bzw. Mehrgrößenregelstrecken. Wenn nachfolgend die Erfindung am Beispiel einer Regelung eines Propellertriebwerks eines Flugzeugs exemplarisch beschrieben wird, so soll die Erfindung jedoch nicht auf diesen speziellen Anwendungsfall beschränkt sein, selbst wenn die Erfindung für diesen Anwendungsfall besonders vorteilhaft verwendet werden kann.

Bei solchen Mehrgrößenregelungssystemen bestehen in der Regel zwischen den mehreren Regelgrößen und den mehreren Stellgrößen Kopplungen der Art, dass eine Stellgröße nicht nur auf eine sondern auf mehrere Regelgrößen wirkt. Weiterhin treten in der Regel Nichtlinearitäten zwischen den mehreren Stellgrößen und den mehreren Regelgrößen auf. Die Kopplungen und die Nichtlinearitäten zwischen den Stellgrößen und den Regelgrößen stellen erhebliche Schwierigkeiten für den Entwurf eines geeigneten Reglers dar, insbesondere dann, wenn über den gesamten Betriebsbereich der Regelstrecke hinweg ein optimales Regelungsergebnis gefordert ist, und nicht lediglich im Bereich eines bevorzugten Betriebspunkts der Regelstrecke.

Wade, Harold L. : "Inverted Decoupling: A Neglected Technique", Advances In Instrumentation And Control, Instrument Society of America, Bd. 51, S. 357-369, 1996 und US 5,4403,074 offenbaren ein Mehrgrößenregelungssystem, mit einer Mehrgrößenregelstrecke, wobei die Mehrgrößenregelstrecke mehrere Stellgrößen als Eingangsgrößen und mehrere Regelgrößen als Ausgangsgrößen aufweist, mit mehreren Vergleichseinrichtungen zur Ermittlung von Regelabweichungen, mit mehreren Reglern, wobei jedem Regler eine Regelabweichung als Eingangsgröße zuführbar ist, und mit einer Umrechnungseinrichtung, deren Eingangsgrößen die von den Reglern bereitgestellten Ausgangsgrößen sind, wobei die Umrechnungseinrichtung zumindest aus den Ausgangsgrößen der Regler die Stellgrößen für die Mehrgrößenregelstrecke berechnet.

Aus Gräser, Axel: " Querprofilregelung in der Papierindustrie - Sensoren und Aktuatoren als bestimmende Elemente der Regelgüte", Automatisierungstechnik, Oldenbourg Verlag, Bd. 45, S. 271-281, 1997 geht ein Regelverfahren mit einer Entkopplung der Einzelkreise und einer Kompensation der Streckenkopplung als bekannt hervor.

Mit den aus dem Stand der Technik bekannten Mehrgrößenregelungssystemen bzw. Verfahren zum Regeln einer Mehrgrößenregelstrecke ist es bislang jedoch nicht oder nur unzureichend möglich, Mehrgrößenregelstrecken mit Kopplungen und Nichtlinearitäten zwischen den Stellgrößen und den Regelgrößen zufriedenstellend zu regeln.

Der vorliegenden Erfindung liegt das Problem zu Grunde, ein verbessertes Mehrgrößenregelungssystem und ein verbessertes Verfahren zum Regeln einer Mehrgrößenregelstrecke, insbesondere zum Regeln eines Propellertriebwerks, zu schaffen.

Dieses Problem wird durch ein Mehrgrößenregelungssystem gemäß Patentanspruch 1 und ein Verfahren zum Regeln einer Mehrgrößenregelstrecke gemäß Patentanspruch 7 gelöst. Das Verfahren zum Regeln eines Propellertriebwerks umfasst die Merkmale des Patentanspruchs 12.

Erfindungsgemäß überlagert die Umrechnungseinrichtung bei der Berechnung der Stellgrößen den Ausgangsgrößen der Regler eine von Istwerten der Regelgrößen abhängige Vorsteuerkomponente. Hierdurch lässt sich eine gute Entkopplung der Stellgrößen und der Regelgrößen der Mehrgrößenregelstrecke erzielen, die der Kompensation der Strecken-Nichtlinearität dient.

Vorzugsweise sind eine erste Regelgrößen-Umrechnungseinrichtung und eine zweite Regelgrößen-Umrechnungseinrichtung vorhanden. Die Ausgangsgrößen der Mehrgrößenregelstrecke - also die Regelgrößen - sind der ersten Regelgrößen-Umrechnungseinrichtung als Eingangsgrößen zuführbar, wobei die erste Regelgrößen-Umrechnungseinrichtung aus den Regelgrößen Ausgangsgrößen ermittelt, die den Vergleichseinrichtungen als erste Eingangsgrößen zuführbar sind. Des weitern sind Sollwerte der Regelgrößen der zweiten Regelgrößen-Umrechnungseinrichtung als Eingangsgrößen zuführbar, wobei die zweite Regelgrößen-Umrechnungseinrichtung aus den Sollwerten Ausgangsgrößen ermittelt, die den Vergleichseinrichtungen als zweite Eingangsgrößen zuführbar sind. Das Regelungsergebnis wird durch die Regelgrößenumrechnung optimiert und die Struktur der Regelung erheblich vereinfacht.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:

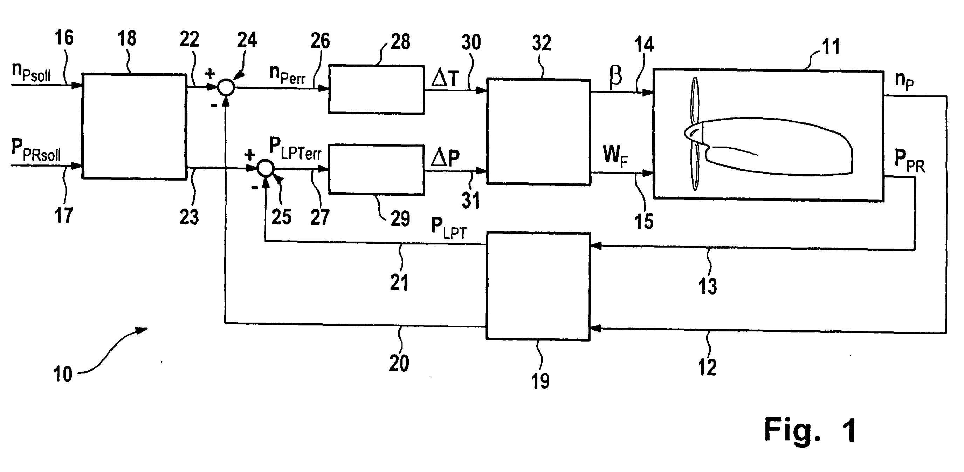

Fig. 1:    einen Regelkreis für ein Propellertriebwerk zur Verdeutlichung des erfindungsgemäßen Mehrgrößenregelungssystems und des erfindungsgemäßen Verfahrens.

Fig. 1 zeigt ein erfindungsgemäßes Mehrgrößenregelungssystem 10. Das in Fig. 1 gezeigte Mehrgrößenregelungssystem 10 verdeutlicht die Erfindung für ein Ausführungsbeispiel, bei welchem eine zu regelnde Mehrgrößenregelstrecke 11 als Propellertriebwerk eines Flugzeugs ausgebildet ist. Obwohl die hier vorliegende Erfindung für diesen Anwendungsfall besonders geeignet ist, kann das erfindungsgemäße Regelungskonzept auch bei anderen Mehrgrößenregelstrecken zum Einsatz kommen.

Wie Fig. 1 zeigt, sollen bei der als Propellertriebwerk ausgebildeten Mehrgrößenregelstrecke 11 eine Propellerdrehzahl $n_P$ und eine Propellerleistung $P_{PR}$ als Regelgrößen 12, 13 geregelt werden. Die beiden Regelgrößen 12, 13 stellen die Ausgangsgrößen der Mehrgrößenregelstrecke 11 dar.

Als Eingangsgrößen werden der als Propellertriebwerk ausgebildeten Mehrgrößenregelstrecke 11 zwei Stellgrößen 14, 15 als Eingangsgrößen zugeführt. Bei der ersten Stellgröße 14 handelt es sich bei dem hier gezeigten Ausführungsbeispiel um einen Propellerblatteinstellwinkel $\beta$. Bei der zweiten Stellgröße 15 handelt es sich um einen Brennstoffstrom $w_F$.

Bei dem Propellertriebwerk handelt es sich demnach um eine Mehrgrößenregelstrecke 11 mit zwei Eingangsgrößen und zwei Ausgangsgrößen. Zwischen den Eingangsgrößen, nämlich den Stellgrößen 14, 15, und den Ausgangsgrößen, also den Regelgrößen 12 und 13, der als Propellertriebwerk ausgebildeten Mehrgrößenregelstrecke 11 bestehen starke Kopplungen und Nichtlinearitäten. Mithilfe des erfindungsgemäßen Mehrgrößenregelungssystems 10 bzw. des erfindungsgemäßen Verfahrens zum Regeln der Mehrgrößenregelstrecke 11 wird eine Lösung vorgeschlagen, mit der die Kopplungen und Nichtlinearitäten zwischen den Stellgrößen 14, 15 und Regelgrößen 12, 13 weitestgehend eliminiert werden können und somit auch über einen breiten Betriebsbereich der zuregelnden Mehrgrößenregelstrecke 11 ein optimiertes Regelungsergebnis unter Verwendung einfacher Reglerstrukturen erzielt werden kann.

Wie bereits erwähnt, soll als erste Regelgröße 12 die Drehzahl des Propellers $n_P$ und als zweite Regelgröße 13 die Leistung des Propellers $P_{PR}$ geregelt werden. Gemessene Werte dieser Regelgrößen 12, 13 bezeichnet man als Istwerte. Es liegt nun im Sinne der Regelungsaufgabe, dass die Istwerte der Regelgrößen 12, 13 mit entsprechenden Sollwerten 16, 17 für die Drehzahl des Propellers und die Leistung des Propellers in Übereinstimmung gebracht werden. So zeigt Fig. 1 als ersten Sollwert 16 einen Sollwert für die Propellerdrehzahl $n_{Psoll}$ sowie als zweiten Sollwert 17 einen Sollwert für die Leistung des Propellers $P_{PRsoll}$.

Erfindungsgemäß werden die Istwerte der Regelgrößen 12, 13 mit den Sollwerten 16, 17 derselben nicht unmittelbar verglichen. Vielmehr ist sowohl für die Istwerte der Regelgrößen 12, 13 als auch für die korrespondierenden Sollwerte 16, 17 jeweils eine Regelgrößen-Umrechnungseinrichtung 18, 19 vorhanden.

Eine erste Regelgrößen-Umrechnungseinrichtung 19 ist den gemessenen Istwerten der Regelgrößen 12, 13 zugeordnet. Eine zweite Regelgrößen-Umrechnungseinrichtung 18 ist hingegen den korrespondierenden Sollwerten 16, 17 zugeordnet. Die erste Regelgrößen-Umrechnungseinrichtung 19 ermittelt aus den Istwerten der Regelgrößen 12, 13 Ausgangsgrößen 20, 21. Entsprechend ermittelt die zweite Regelgrößen-Umrechnungseinrichtung 18 aus den Sollwerten 16, 17 die Ausgangsgrößen 22, 23. Die Ausgangsgrößen 20, 21 der ersten Regelgrößen-Umrechnungseinrichtung 19 und die Ausgangsgrößen 22, 23 der zweiten Regelgrößen-Umrechnungseinrichtung 18 werden Vergleichseinrichtungen 24, 25 als Eingangsgrößen zugeführt. In den Vergleichseinrichtungen 24, 25 werden die entsprechenden Ausgangsgrößen 20, 21, 22, 23 der Regelgrößen-Umrechnungseinrichtungen 18, 19 miteinander verrechnet. Hierauf wird weiter unten noch in größerem Detail eingegangen.

Vorab soll an dieser Stelle auf die in den Regelgrößen-Umrechnungseinrichtungen 18, 19 durchgeführten Umrechnungen der Istwerte der Regelgrößen 12, 13 sowie deren Sollwerte 16, 17 eingegangen werden. So stellt die erste Regelgrößen-Umrechnungseinrichtung 19, der als Eingangsgrößen die Regelgrößen 12, 13 - also Istwerte der Propellerdrehzahl $n_P$ sowie der Propellerleistung $P_{PR}$ zugeführt werden - zwei Ausgangsgrößen 20, 21 bereit, die aus den Eingangsgrößen der Regelgrößen-Umrechnungseinrichtung 19 und aus Kennwerten der Mehrgrößenregelstrecke 11 berechnet werden. So gibt im gezeigten Ausführungsbeispiel die erste Regelgrößen-Umrechnungseinrichtung 19 als erste Ausgangsgröße 20 die Regelgröße 12, also die Propellerdrehzahl $n_P$, als erste Ausgangsgröße aus. Als zweite Ausgangsgröße 21 hingegen wird von der ersten Regelgrößen-Umrechnungseinrichtung 19 eine aus den Istwerten der Regelgrößen 12, 13 ermittelte Größe ausgegeben, nämlich im gezeigten Ausführungsbeispiel ein ermittelter Wert einer Turbinenleistung $P_{LPT}$. Der ersten Regelgrößen-Umrechnungseinrichtung 19 werden demnach als Eingangsgrößen die Propellerdrehzahl $n_P$ und die Propellerleistung $P_{PR}$ zugeführt. Als Ausgangsgrößen 20, 21 gibt die Regelgrößen-Umrechnungseinrichtung 19 die Propellerdrehzahl $n_P$ und die Turbinenleistung $P_{LPT}$ aus. Zur Ermittlung der Turbinenleistung $P_{LPT}$ aus den Regelgrößen 12, 13 wird nach folgender Gleichung vorgegangen:

$$P_{LPT} = P_{PR} + n_P * dn_P/dt * \Theta * 4\pi^2$$

wobei gilt:

$P_{LPT}$ = Turbinenleistung,
$P_{PR}$ = Propellerleistung,
$n_P$ = Propellerdrehzahl,
$dn_P/dt$ = 1. Ableitung der Propellerdrehzahl,
$\Theta$ = Massenträgheitsmoment des Propellertriebwerks.

Unter Verwendung der obigen Gleichung können aus den Regelgrößen 12, 13 in der ersten Regelgrößen-Umrechnungseinrichtung 19 auf einfache Weise die Ausgangsgrößen 20, 21 der ersten Regelgrößen-Umrechnungseinrichtung ermittelt werden.

In analoger Weise wird die obige Gleichung auch in der zweiten Regelgrößen-Umrechnungseinrichtung 18 verwendet, in der aus den Sollwerten 16, 17 die Ausgangsgrößen 22, 23 errechnet werden.

In die zweite Regelgrößen-Umrechnungseinrichtung 18 ist zusätzlich noch eine Zeitverzögerungseinrichtung für den Sollwert der Propellerdrehzahl integriert. Die Ausgangsgröße 22 der Regelgrößen-Umrechnungseinrichtung 18 entspricht damit dem Sollwert für die Propellerdrehzahl $n_{Psoll}$ mit einer Zeitverzögerung von vorzugsweise 200 Millisekunden. Durch diese zeitverzögerte Durchleitung des Sollwerts für die Propellerdrehzahl wird der dynamische Zeitverzögerungseffekt des Propellertriebwerks ausgeglichen.

An dieser Stelle soll darauf hingewiesen werden, dass die Ausgangsgrößen 20, 21 der ersten Regelgrößen-Umrechungseinrichtung 19 auch als Hilfs-Regelgrößen und die Ausgangsgrößen 22, 23 der zweiten Regelgrößen-Umrechnungseinrichtung 18 auch als Hilfs-Sollwerte bezeichnet werden können.

Wie bereits oben erwähnt, werden die Ausgangsgrößen 20, 21 der ersten Regelgrößen-Umrechnungseinrichtung 19 und die Ausgangsgrößen 22, 23 der zweiten Regelgrößen-Umrechnungseinrichtung 18 den Vergleichseinrichtungen 24, 25 als Eingangsgrößen zugeführt. Wie Fig. 1 zeigt, werden einer ersten Vergleichseinrichtung 24 die Ausgangsgrößen 20, 22 der Regelgrößen-Umrechnungseinrichtungen 18, 19 zugeführt. Im gezeigten Ausführungsbeispiel handelt es sich hierbei um die umgerechneten Istwerte und Sollwerte für die Propellerdrehzahl $n_P$. In der Vergleichseinrichtung 24 wird eine Differenz zwischen diesem Hilfs-Sollwert für die Propellerdrehzahl und dem Hilfs-Istwert für die Propellerdrehzahl gebildet und hieraus eine Regelabweichung 26 für die Propellerdrehzahl errechnet. Die Regelabweichung für die Propellerdrehzahl ist in Fig. 1 mit $n_{Perr}$ bezeichnet.

Analog wird in der zweiten Vergleichseinrichtung 25 eine Differenz zwischen der Ausgangsgröße 23 der zweiten Regelgrößen-Umrechnungseinrichtung 18 und der Ausgangsgröße 21 der ersten Regelgrößen-Umrechnungseinrichtung 19 errechnet. Im gezeigten Ausführungsbeispiel wird demnach in der zweiten Vergleichseinrichtung 25 eine Differenz zwischen einem errechneten Istwert der als Hilfs-Regelgröße dienenden Turbinenleistung $P_{LPT}$ und einem entsprechend errechneten Sollwert für diese Hilfs-Regelgröße ermittelt. Eine korrespondierende Regelabweichung 27 zwischen dem Istwert und dem Sollwert der als Hilfs-Regelgröße dienenden Turbinenleistung ist in Fig. 1 mit $P_{LPTerr}$ bezeichnet.

Die Regelabweichungen 26, 27 der Hilfsregelgrößen 20, 21 werden gemäß Fig. 1 den Reglern 28, 29 zugeführt. Einem ersten Regler 28 wird die Regelabweichung 26 der Hilfs-Regelgröße 20 zugeführt. Bei der dem ersten Regler 28 zugeführten Regelabweichung 26 handelt es sich demnach um die Regeldifferenz zwischen dem Hilfs-Sollwert 22 der Propellerdrehzahl und dem Hilfs-Istwert 20 für die Propellerdrehzahl. Der erste Regler 28 ist demnach als Drehzahlregler ausgebildet. Aus der Regelabweichung 26 ermittelt der erste Regler 28 eine Ausgangsgröße 30 desselben. Bei der Ausgangsgröße 30 handelt es sich im gezeigten Ausführungsbeispiel um eine Drehmomentanforderung ΔT.

Analog wird einem zweitem Regler 29 die Regelabweichung 27 der Hilfs-Regelgröße 21 zugeführt. Bei der Regelabweichung 27 handelt es sich also um die Differenz zwischen dem Sollwert 23 und dem entsprechenden Istwert 20 der als Hilfs-Regelgröße dienenden Turbinenleistung $P_{LPT}$. Der zweite Regler 29 ist demzufolge als Leistungsregler ausgebildet. Aus der Regelabweichung 27 ermittelt der zweite Regler 29 eine Ausgangsgröße 31. Bei der Ausgangsgröße 31 des zweiten Reglers 29 handelt es sich im gezeigten Ausführungsbeispiel um eine Leistungsanforderung ΔP.

Die beiden Regler 28, 29 können zum Beispiel als PID-Regler ausgebildet sein. Die Ermittlung geeigneter Reglerparameter obliegt dem angesprochenem Fachmann.

Die Ausgangsgrößen 30, 31 der Regler 28, 29 werden nicht unmittelbar als Stellgrößen für die Mehrgrößenregelstrecke 11 verwendet, sondern vielmehr einer Umrechnungseinrichtung 32 zugeführt. Die Ausgangsgrößen 30, 31 der Regler 28, 29 dienen demnach der Umrechnungseinrichtung 32 als Eingangsgrößen. In der Umrechnungseinrichtung 32 werden die Ausgangsgrößen 30, 31 miteinander verrechnet. Die Umrechnungseinrichtung 32 ermittelt aus den Ausgangsgrößen 30, 31 der Regler 28, 29 und aus Kennwerten der Mehrgrößenregelstrecke 11 die Stellgrößen 14, 15 für die Mehrgrößenregelstrecke 11. Im gezeigten Ausführungsbeispiel bedeutet dies, dass der Umrechnungseinrichtung 32 als Eingangsgrößen die Drehmomentanforderung ΔT und die Leistungsanforderung ΔP als Eingangsgrößen zugeführt werden. Aus diesen beiden Eingangsgrößen ermittelt die Umrechnungseinrichtung 32 den Propellerblatteinstellwinkel β und den Brennstoffstrom $w_F$ als Stellgrößen für das Propellertriebwerk 11. Hierbei wird vorzugsweise nach folgenden Modellgleichungen vorgegangen:

$$T = \beta^{E1} \ast n_P{}^{E2}$$

$$P = w_F{}^{E3} \ast n_P{}^{E4}$$

wobei gilt:

P = Turbinenleistung, Ausgangsgröße des Drehzahlreglers,
T = Drehmoment, Ausgangsgröße des Leistungsreglers,
$n_P$ = Propellerdrehzahl,
$w_F$ = Brennstoffstrom, gesuchte Stellgröße
β = Propellerblatteinstellwinkel, gesuchte Stellgröße
E1, E2, E3, E4 = Exponenten des Modells.

Nach dem erfindungsgemäßen Aspekt der hier vorliegenden Erfindung werden in der Umrechnungseinrichtung 32 zur Ermittlung der Stellgrößen 14, 15 nicht nur die Ausgangsgrößen 30, 31 der beiden Regler 28, 29 miteinander verrechnet, vielmehr wird zusätzlich in der Umrechnungseinrichtung 32 eine istwertabhängige Vorsteuerungskomponente überlagert. Demnach werden Charakteristiken der Mehrgrößenregelstrecke 11, im hier vorliegenden Ausführungsbeispiel handelt es sich um Charakteristiken der Turbine und des Propellers, in die Stellpfade des Mehrgrößenregelungssystems 10 eingeschleift.

Hierbei werden im gezeigten Ausführungsbeispiel Kennfelder des Propellers und der Turbine berücksichtigt. Derartige Kennfelder werden aus der mathematischen bzw. systemdynamischen Modellierung der Mehrgrößenregelstrecke 11, im gezeigten Ausführungsbeispiel des Propellertriebwerks, gewonnen.

Diesen Kennfeldern, die dem hier angesprochenen Fachmann geläufig sind, werden als Eingangsgrößen die Ausgangsgrößen 30, 31 der beiden Regler 28, 29 und zusätzlich die als Vorsteuerungskomponenten dienenden, gemessenen korrespondierenden Istwerte zugeführt. Zu den Ausgangsgrößen 30, 31 der beiden Regler 28, 29 wird die jeweilige Vorsteuerungskomponente addiert, und diese Summe wird dem entsprechenden Kennfeld als Eingangsgröße zugeführt. In diesem Zusammenhang gilt:

$$T = f(\beta, n_P, \ldots) \text{ und } T = \Delta T + T_{ist}$$

$$P = f(w_F, n_P, \ldots) \text{ und } P = \Delta P + P_{ist}$$

5

wobei gilt:

f($\beta$, $n_P$, ...), f($w_F$, $n_P$, ...) = Kennfelder,
$T_{ist}$, $P_{ist}$ = Vorsteuerungskomponenten.

Daraus folgt dann:

$$\beta = f(\Delta T + T_{ist}, n_P, ...)$$

$$w_F = f(\Delta P + P_{ist}, n_P, ...)$$

Dies bedeutet, dass die Kennfelder nicht lediglich mit nominellen bzw. gemessenen Eingängen $T_{ist}$ bzw. $P_{ist}$ beaufschlagt werden, sondern zusätzlich mit dynamisch ermittelten Ausgangsgrößen der beiden Regler 28, 29. Die Ausgangsgrößen 30, 31 der beiden Regler 28, 29 werden durch die Kennfelder der Mehrgrößenregelstrecke 11 durchgeschleift und so einer weiteren Umrechnung unterzogen.

Das hier beschriebene Mehrgrößenregelungssystem 10 bzw. das Verfahren zum Regeln der Mehrgrößenregelstrecke 11 umfasst demnach die folgenden drei Blöcke:

Nach einem ersten Block werden die Ausgangsgrößen der Mehrgrößenregelstrecke 11, also die Regelgrößen 12, 13, sowie entsprechende Sollwerte 16, 17 für die Regelgrößen 12, 13 in Regelgrößen-Umrechnungseinrichtungen 18, 19 in Hilfs-Regelgrößen 20, 21 sowie entsprechende Sollwerte 22, 23 für die Hilfs-Regelgrößen umgerechnet. Nach einem zweiten Block der Erfindung werden die aus den Regelabweichungen 26, 27 der Hilfs-Regelgrößen 20, 21 ermittelten Ausgangsgrößen 30, 31 der Regler 28, 29 einer Umrechnungseinrichtung 32 zugeführt. In der Umrechnungseinrichtung 32 werden aus den Ausgangsgrößen 30, 31 der Regler 28, 29 die Stellgrößen 14, 15 für die Mehrgrößenregelstrecke 11 gebildet. Nach einem dritten Block der Erfindung wird in der Umrechnungseinrichtung 32 den Ausgangsgrößen 30, 31 der Regler 28, 29 mindestens eine Vorsteuerungskomponente überlagert. Diese Vorsteuerungskomponente ist von der Modellierung der Mehrgrößenregelstrecke 11 abhängig. Bei den Vorsteuerungskomponenten handelt es sich um Kennfelder der Mehrgrößenregelstrecke 11, wobei als Eingangsgrößen für diese Kennfelder die dynamisch ermittelten Ausgangsgrößen 30, 31 der Regler 28, 29 und die gemessenen korrespondierenden Istwerte - sogenannte Vorsteuerungskomponenten - verwendet werden.

Unter Verwendung der Struktur des erfindungsgemäßen Mehrgrößenregelungssystems 10 lassen sich auf einfache Art und Weise Kopplungen zwischen den Stellgrößen 14, 15 und den Regelgrößen 12, 13 der Mehrgrößenregelstrecke 11 sowie Nichtlinearitäten im dynamischen Verhalten der Mehrgrößenregelstrecke 11 eliminieren. Das Mehrgrößenregelungsproblem der Mehrgrößenregelstrecke 11 lässt sich so auf entkoppelte, lineare Regelkreise mit einer Eingangsgröße sowie einer Ausgangsgröße zurückführen. Mit einfachen Regelgesetzen, zum Beispiel PID-Reglern, lässt sich dann eine zufriedenstellende Regelung der Mehrgrößenregelstrecke 11 über den gesamten Betriebsbereich der Mehrgrößenregelstrecke 11 realisieren.

Das erfindungsgemäße Mehrgrößenregelungssystem 10 lässt sich besonders vorteilhaft zur Regelung eines Propellertriebwerks einsetzen. Die bei einem Propellertriebwerk auftretenden starken Nichtlinearitäten im dynamischen Übertragungsverhalten sowie die starken Kopplungen zwischen den Stellgrößen und den Regelgrößen des Propellertriebwerks lassen sich unter Verwendung der Erfindung einfach eliminieren. Die Propellerdrehzahl $n_P$ sowie die Propellerleistung $P_{PR}$ lassen sich mithilfe der erfindungsgemäßen Regelgrößen-Umrechnung sowie Stellgrößen-Umrechnung voneinander entkoppeln und weitgehend linear regeln. Mit einem einfachen Satz an Reglerparametern lässt sich eine optimierte Regelung eines Propellertriebwerks über den gesamten Betriebsbereich des Propellertriebwerks erzielen. Das erfindungsgemäße Mehrgrößenregelungssystem 10 zeichnet sich durch ein robustes Reglerverhalten aus.

Bezugszeichenliste

| | |
|---|---|
| Mehrgrößenregelungssystem | 10 |
| Mehrgrößenregelstrecke | 11 |
| Regelgröße | 12 |
| Regelgröße | 13 |
| Stellgröße | 14 |

| Stellgröße | 15 |
| Sollwert | 16 |
| Sollwert | 17 |
| Regelgrößen-Umrechnungseinrichtung | 18 |
| Regelgrößen-Umrechnungseinrichtung | 19 |
| Ausgangsgröße | 20 |
| Ausgangsgröße | 21 |
| Ausgangsgröße | 22 |
| Ausgangsgröße | 23 |
| Vergleichseinrichtung | 24 |
| Vergleichseinrichtung | 25 |
| Regelabweichung | 26 |
| Regelabweichung | 27 |
| Regler | 28 |
| Regler | 29 |
| Ausgangsgröße | 30 |
| Ausgangsgröße | 31 |
| Stellgrößen-Umrechnungseinrichtung | 32 |

**Patentansprüche**

1. Mehrgrößenregelungssystem, mit einer Mehrgrößenregelstrecke (11), wobei die Mehrgrößenregelstrecke mehrere Stellgrößen (14, 15) als Eingangsgrößen und mehrere Regelgrößen (12, 13) als Ausgangsgrößen aufweist, mit mehreren Vergleichseinrichtungen (24, 25) zur Ermittlung von Regelabweichungen (26, 27), mit mehreren Reglern (28, 29), wobei jedem Regler (28, 29) eine Regelabweichung (26, 27) als Eingangsgröße zuführbar ist und mit einer Umrechnungseinrichtung (32), deren Eingangsgrößen die von den Reglern (28, 29) bereitgestellten Ausgangsgrößen (30, 31) sind, wobei die Umrechnungseinrichtung (32) zumindest aus den Ausgangsgrößen (30, 31) der Regler (28, 29) die Stellgrößen (14, 15) für die Mehrgrößenregelstrecke (11) berechnet, **dadurch gekennzeichnet, dass** die Umrechnungseinrichtung (32) zur Berechnung der Stellgrößen (14, 15) den Ausgangsgrößen (30, 31) der Regler (28, 29) eine istwertabhängige Vorsteuerungskomponente überlagert.

2. Mehrgrößenregelungssystem nach Anspruch 1, **dadurch gekennzeichnet, dass** die Umrechnungseinrichtung (32) zur Berechnung der Stellgrößen (14, 15) die Ausgangsgrößen (30, 31) der Regler (28, 29) miteinander verrechnet.

3. Mehrgrößenregelungssystem nach Anspruch 2, **dadurch gekennzeichnet, dass** die Verrechnung der Ausgangsgrößen (30, 31) der Regler (28, 29) von der Mehrgrößenregelstrecke (11) abhängig ist.

4. Mehrgrößenregelungssystem nach einem oder mehreren der Ansprüche 1 bis 3, **gekennzeichnet durch** eine erste Regelgrößen-Umrechnungseinrichtung (19), wobei die Regelgrößen (12, 13) der ersten Regelgrößen-Umrechnungseinrichtung (19) als Eingangsgrößen zuführbar sind, und wobei die erste Regelgrößen-Umrechnungseinrichtung (19) aus den Regelgrößen (12, 13) Ausgangsgrößen (20, 21) ermittelt, die den Vergleichseinrichtungen (24, 25) als erste Eingangsgrößen zuführbar sind.

5. Mehrgrößenregelungssystem nach einem oder mehreren der Ansprüche 1 bis 4, **gekennzeichnet durch** eine zweite Regelgrößen-Umrechnungseinrichtung (18), wobei Sollwerte (16, 17) der Regelgrößen (12, 13) der zweiten Regelgrößen-Umrechnungseinrichtung (18) als Eingangsgrößen zuführbar sind, und wobei die zweite Regelgrößen-Umrechnungseinrichtung (18) aus den Sollwerten (16, 17) Ausgangsgrößen (22, 23) ermittelt, die den Vergleichseinrichtungen (24, 25) als zweite Eingangsgrößen zuführbar sind.

6. Mehrgrößenregelungssystem nach Anspruch 4 oder 5, **dadurch gekennzeichnet, dass** die Vergleichseinrichtungen (24, 25) die ersten Eingangsgrößen derselben mit korrespondierenden zweiten Eingangsgrößen derselben verrechnen, und dass die daraus resultierenden Regelabweichungen (26, 27) den Reglern (28, 29) als Eingangsgrößen zuführbar sind.

7. Verfahren zum Regeln einer Mehrgrößenregelstrecke, wobei der Mehrgrößenregelstrecke (11) mehrere Stellgrößen (14, 15) als Eingangsgrößen zugeführt werden, wobei mehrere Regelgrößen (12, 13) als Ausgangsgrößen der Mehrgrößenregelstrecke (11) zur Ermittlung von Regelabweichungen (26, 27) ausgegeben werden, und wobei jede Regelabweichung (26, 27) einem Regler (28, 29) als Eingangsgröße zugeführt wird, wobei einer Umrechnungseinrichtung (32) von den Reglern (28, 29) bereitgestellte Ausgangsgrößen (30, 31) als Eingangsgrößen zugeführt werden und in der Umrechnungseinrichtung (32) zumindest aus den Ausgangsgrößen (30, 31) der Regler (28, 29) die Stellgrößen (14, 15) für die Mehrgrößenregelstrecke (11) berechnet werden, **dadurch gekennzeichnet, dass** zur Berechnung der Stellgrößen (14, 15) die Ausgangsgrößen (30, 31) der Regler (28, 29) zusätzlich mit einer istwertabhängigen Vorsteuerungskomponente überlagert werden.

8. Verfahren nach Anspruch 8, **dadurch gekennzeichnet, dass** zur Ermittlung der Stellgrößen (14, 15) die Ausgangsgrößen (30, 31) der Regler (28, 29) miteinander verrechnet werden.

9. Verfahren nach Anspruch 7 oder 8 **dadurch gekennzeichnet, dass** die Regelgrößen (12, 13) der Mehrgrößenregelstrecke (11) einer ersten Regelgrößen-Umrechnungseinrichtung (19) als Eingangsgrößen zugeführt werden, wobei die erste Regelgrößen-Umrechnungseinrichtung (19) aus den Regelgrößen (12, 13) Ausgangsgrößen (20, 21) ermittelt, die den Vergleichseinrichtungen (24, 25) als erste Eingangsgrößen zugeführt werden.

10. Verfahren nach einem oder mehreren der Ansprüche 7 bis 9, **dadurch gekennzeichnet, dass** Sollwerte (16, 17) der Regelgrößen einer zweiten Regelgrößen-Umrechnungseinrichtung (18) als Eingangsgrößen zugeführt werden, wobei die zweite Regelgrößen-Umrechnungseinrichtung (18) aus den Sollwerten (16, 17) Ausgangsgrößen (22, 23) ermittelt, die den Vergleichseinrichtungen (24, 25) als zweite Eingangsgrößen zugeführt werden.

11. Verfahren nach Anspruch 9 oder 10, **dadurch gekennzeichnet, dass** die ersten Eingangsgrößen der Vergleichseinrichtungen (24, 25) und die korrespondierenden zweiten Eingangsgrößen derselben verrechnet werden, und dass die daraus resultierenden Regelabweichungen (26, 27) den Reglern (28, 29) als Eingangsgrößen zugeführt werden.

12. Verfahren zum Regeln eines Propellertriebwerks, wobei als Regelgrößen eine Propellerdrehzahl (12) und eine Propellerleistung (13) geregelt werden, wobei dem Propellertriebwerk (11) als Stellgrößen ein Propellerblatteinstellwinkel (14) und ein Brennstoffstrom (15) zugeführt werden, wobei zur Ermittlung des Propellerblatteinstellwinkels (14) und des Brennstoffstroms (15) von Reglern (28, 29) bereitgestellte Ausgangsgrößen (30, 31) einer Umrechnungseinrichtung (32) als Eingangsgrößen zugeführt werden und die Umrechnungseinrichtung (32) aus den Ausgangsgrößen (30, 31) der Regler (28, 29) den Propellerblatteinstellwinkel (14) und den Brennstoffstrom (15) als Stellgrößen ermittelt, **dadurch gekennzeichnet, dass** in der Umrechnungseinrichtung (32) die Ausgangsgrößen (30, 31) der Regler (28, 29) miteinander verrechnet und zusätzlich mit einer istwertabhängigen Vorsteuerungskomponente überlagert werden.

13. Verfahren nach Anspruch 12, **dadurch gekennzeichnet, dass** die Propellerdrehzahl (12) und die Propellerleistung (13) als Regelgrößen des Propellertriebwerks (11) einer ersten Regelgrößen-Umrechnungseinrichtung (19) als Eingangsgrößen zugeführt werden, wobei die erste Regelgrößen-Umrechnungseinrichtung (19) als Ausgangsgrößen Istwerte für die Propellerdrehzahl (20) und eine Turbinenleistung (21) bereitstellt.

14. Verfahren nach Anspruch 12 oder 13, **dadurch gekennzeichnet, dass** Sollwerte für die Propellerdrehzahl (16) und die Propellerleistung (17) einer zweiten Regelgrößen-Umrechnungseinrichtung (18) als Eingangsgrößen zugeführt werden, wobei die zweite Regelgrößen-Umrechnungseinrichtung (18) als Ausgangsgrößen Sollwerte für die Propellerdrehzahl (22) und eine Turbinenleistung (23) bereitstellt.

15. Verfahren nach Anspruch 13 oder 14, **dadurch gekennzeichnet, dass** aus den Istwerten und den korrespondierenden Sollwerten für die Propellerdrehzahl und die Turbinenleistung entsprechende Regelabweichungen (26, 27) ermittelt werden, wobei die Propellerdrehzahl-Regelabweichung (26) einem Drehzahlregler (28) und die Turbinenleistung- Regelabweichung (27) einem Leistungsregler (29) zugeführt werden.

16. Verfahren nach Anspruch 15, **dadurch gekennzeichnet, dass** der Drehzahlregler (28) als Ausgangsgröße eine Drehmomentanforderung (30) und der Leistungsregler (29) als Ausgangsgröße eine Turbinenleistungsanforderung (31) bereitstellt, wobei in der Umrechnungseinrichtung (32) aus der Drehmomentanforderung (30) und der Turbinenleistungsanforderung (31) der Propellerblatteinstellwinkel (14) und der Brennstoffstrom (15) ermittelt werden.

**Claims**

1.  A multi-variable control system having a multi-variable controlled member (11), wherein the multi-variable controlled member has a plurality of manipulated variables (14, 15) as input variables and a plurality of controlled variables (12, 13) as output variables, having a plurality of comparison devices (24, 25) for determining control deviations (26, 27), having a plurality of controllers (28, 29), wherein a control deviation (26, 27) can be fed as an input variable to each controller (28, 29), and having a conversion device (32) whose input variables are the output variables (30, 31) provided by the controllers (28, 29), wherein the conversion device (32) calculates the manipulated variables (14, 15) for the multi-variable controlled member (11) at least from the output variables (30, 31) of the controllers (28, 29), **characterised in that** in order to calculate the manipulated variables (14, 15) the conversion device (32) superimposes an actual-value-dependent pre-control component on the output variables (30, 31) of the controllers (28, 29).

2.  A multi-variable control system according to claim 1, **characterised in that** in order to calculate the manipulated variables (14, 15) the conversion device (32) sets the output variables (30, 31) of the controllers (28, 29) off against each other.

3.  A multi-variable control system according to claim 2, **characterised in that** the setting-off of the output variables (30, 31) of the controllers (28, 29) is dependent upon the multi-variable controlled member (11).

4.  A multi-variable control system according to one or more of claims 1 to 3, **characterised by** a first controlled-variable conversion device (19), wherein the controlled variables (12, 13) can be fed as input variables to the first controlled-variable conversion device (19), and wherein the first controlled-variable conversion device (19) determines from the controlled variables (12, 13) output variables (20, 21) which can be fed as first input variables to the comparison devices (24, 25).

5.  A multi-variable control system according to one or more of claims 1 to 4, **characterised by** a second controlled-variable conversion device (18), wherein rated values (16, 17) of the controlled variables (12, 13) can be fed as input variables to the second controlled-variable conversion device (18), and wherein the second controlled-variable conversion device (18) determines from the rated values (16, 17) output variables (22, 23) which can be fed as second input variables to the comparison devices (24, 25).

6.  A multi-variable control system according to claim 4 or 5, **characterised in that** the comparison devices (24, 25) set the first input variables of the same off against corresponding second input variables of the same, and **in that** the resultant control deviations (26, 27) can be fed as input variables to the controllers (28, 29).

7.  A method for controlling a multi-variable controlled member, wherein a plurality of manipulated variables (14, 15) are fed as input variables to the multi-variable controlled member (11), wherein a plurality of controlled variables (12, 13) are output as output variables of the multi-variable controlled member (11) in order to determine control deviations (26, 27), and wherein each control deviation (26, 27) is fed as an input variable to a controller (28, 29), wherein output variables (30, 31) provided by the controllers (28, 29) are fed as input variables to a conversion device (32) and in the conversion device (32) the manipulated variables (14, 15) for the multi-variable controlled member (11) are calculated at least from the output variables (30, 31) of the controllers (28, 29), **characterised in that** in order to calculate the manipulated variables (14, 15) the output variables (30, 31) of the controllers (28, 29) are additionally superimposed with an actual-value-dependent pre-control component.

8.  A method according to claim 8, **characterised in that** in order to determine the manipulated variables (14, 15) the output variables (30, 31) of the controllers (28, 29) are set off against each other.

9.  A method according to claim 7 or 8, **characterised in that** the controlled variables (12, 13) of the multi-variable controlled member (11) are fed as input variables to a first controlled-variable conversion device (19), wherein the first controlled-variable conversion device (19) determines from the controlled variables (12, 13) output variables (20, 21) that are fed as first input variables to the comparison devices (24, 25).

10. A method according to one or more of claims 7 to 9, **characterised in that** rated values (16, 17) of the controlled variables are fed as input variables to a second controlled-variable conversion device (18), wherein the second controlled-variable conversion device (18) determines from the rated values (16, 17) output variables (22, 23) that are fed as second input variables to the comparison devices (24, 25).

**11.** A method according to claim 9 or 10, **characterised in that** the first input variables of the comparison devices (24, 25) are set off against the corresponding second input variables of the same, and **in that** the resultant control deviations (26, 27) are fed as input variables to the controllers (28, 29).

**12.** A method for controlling a propeller engine, wherein a propeller speed (12) and a propeller power (13) are controlled as controlled variables, wherein a propeller blade angle (14) and a fuel flow (15) are fed as manipulated variables to the propeller engine (11), wherein in order to determine the propeller blade angle (14) and the fuel flow (15) output variables (30, 31) provided by controllers (28, 29) are fed as input variables to a conversion device (32), and the conversion device (32) determines the propeller blade angle (14) and the fuel flow (15) as manipulated variables from the output variables (30, 31) of the controllers (28, 29), **characterised in that** in the conversion device (32) the output variables (30, 31) of the controllers (28, 29) are set off against each other and are additionally superimposed with an actual-value-dependent pre-control component.

**13.** A method according to claim 12, **characterised in that** the propeller speed (12) and the propeller power (13) as controlled variables of the propeller engine (11) are fed as input variables to a first controlled-variable conversion device (19), wherein the first controlled-variable conversion device (19) provides as output variables actual values for the propeller speed (20) and a turbine power (21).

**14.** A method according to claim 12 or 13, **characterised in that** rated values for the propeller speed (16) and the propeller power (17) are fed as input variables to a second controlled-variable conversion device (18), wherein the second controlled-variable conversion device (18) provides as output variables rated values for the propeller speed (22) and a turbine power (23).

**15.** A method according to claim 13 or 14, **characterised in that** from the actual values and the corresponding rated values for the propeller speed and the turbine power proportionate control deviations (26, 27) are determined, wherein the propeller-speed control deviation (26) is fed to a speed-controller (28) and the turbine-power control deviation (27) is fed to a power-controller (29).

**16.** A method according to claim 15, **characterised in that** the speed-controller (28) provides as an output variable a torque request (30) and the power-controller (29) provides as an output variable a turbine-power request (31), wherein in the conversion device (32) the propeller blade angle (14) and the fuel flow (15) are determined from the torque request (30) and the turbine-power request (31).

**Revendications**

**1.** Système d'asservissement à variables multiples, avec un système asservi à variables multiples (11), dans lequel le système asservi à variables multiples comprend plusieurs grandeurs de commande (14, 15) en tant que grandeurs d'entrée et plusieurs grandeurs asservies (12, 13) en tant que grandeurs de sortie, avec plusieurs comparateurs (24, 25) pour déterminer des écarts de réglage (26, 27), avec plusieurs asservisseurs (28, 29), dans lequel chaque asservisseur (28, 29) peut se voir amener un écart de réglage (26, 27) en tant que grandeur d'entrée, et avec un dispositif de conversion (32) dont les grandeurs d'entrée sont les grandeurs de sortie (30, 31) fournies par les asservisseurs (28, 29), dans lequel le dispositif de conversion (32) calcule au moins à partir des grandeurs de sortie (30, 31) des asservisseurs (28, 29) les grandeurs de commande (14, 15) pour le système asservi à variables multiples (11), **caractérisé en ce que** le dispositif de conversion (32) superpose pour le calcul des grandeurs de commande (14, 15) aux grandeurs de sortie (30, 31) des asservisseurs (28, 29) une composante de commande pilote dépendant de valeurs réelles.

**2.** Système d'asservissement à variables multiples selon la revendication 1, **caractérisé en ce que** le dispositif de conversion (32) compense pour le calcul des grandeurs de commande (14, 15) les grandeurs de sortie (30, 31) des asservisseurs (28, 29) entre elles.

**3.** Système d'asservissement à variables multiples selon la revendication 2, **caractérisé en ce que** la compensation des grandeurs de sortie (30, 31) des asservisseurs (28, 29) dépend du système asservi à variables multiples (11).

**4.** Système d'asservissement à variables multiples selon l'une quelconque ou plusieurs des revendications 1 à 3, **caractérisé par** un premier dispositif de conversion de grandeurs asservies (19), dans lequel les grandeurs asservies (12, 13) peuvent être amenées au premier dispositif de conversion de grandeurs asservies (19) en tant que grandeurs d'entrée, et dans lequel le premier dispositif de conversion de grandeurs asservies (19) détermine à partir des grandeurs asservies (12, 13) des grandeurs de sortie (20, 21) qui peuvent être amenées aux comparateurs (24, 25) en tant que premières grandeurs d'entrée.

5. Système d'asservissement à variables multiples selon l'une quelconque ou plusieurs des revendications 1 à 4, **caractérisé par** un deuxième dispositif de conversion de grandeurs asservies (18), dans lequel des valeurs de consigne (16, 17) des grandeurs asservies (12, 13) peuvent être amenées au deuxième dispositif de conversion de grandeurs asservies (18) en tant que grandeurs d'entrée, et dans lequel le deuxième dispositif de conversion de grandeurs asservies (18) détermine à partir des valeurs de consigne (16, 17) des grandeurs de sortie (22, 23) qui peuvent être amenées aux comparateurs (24, 25) en tant que deuxièmes grandeurs d'entrée.

6. Système d'asservissement à variables multiples selon la revendication 4 ou 5, **caractérisé en ce que** les comparateurs (24, 25) compensent leurs premières grandeurs d'entrée avec leurs deuxièmes grandeurs d'entrée correspondantes, et **en ce que** les écarts de réglage (26, 27) qui en résultent peuvent être amenés aux asservisseurs (28, 29) en tant que grandeurs d'entrée.

7. Procédé pour asservir un système asservi à variables multiples, dans lequel le système asservi à variables multiples (11) se voit amener plusieurs grandeurs de commande (14, 15) en tant que grandeurs d'entrée, dans lequel plusieurs grandeurs asservies (12, 13) sont délivrées en tant que grandeurs de sortie du système asservi à variables multiples (11) pour déterminer des écarts de réglage (26, 27), et dans lequel chaque écart de réglage (26, 27) est amené à un asservisseur (28, 29) en tant que grandeur d'entrée, dans lequel un dispositif de conversion (32) se voit amener des grandeurs de sortie (30, 31) fournies par les asservisseurs (28, 29) en tant que grandeurs d'entrée, et dans le dispositif de conversion (32), au moins à partir des grandeurs de sortie (30, 31) des asservisseurs (28, 29), les grandeurs de commande (14, 15) pour le système asservi à variables multiples (11) sont calculées, **caractérisé en ce que** pour le calcul des grandeurs de commande (14, 15), les grandeurs de sortie (30, 31) des asservisseurs (28, 29) sont de plus superposées d'une composante de commande pilote dépendant de valeurs réelles.

8. Procédé selon la revendication 8, **caractérisé en ce que** pour la détermination des grandeurs de commande (14, 15), les grandeurs de sortie (30, 31) des asservisseurs (28, 29) sont compensées entre elles.

9. Procédé selon la revendication 7 ou 8, **caractérisé en ce que** les grandeurs asservies (12, 13) du système asservi à variables multiples (11) sont amenées à un premier dispositif de conversion de grandeurs asservies (19) en tant que grandeurs d'entrée, dans lequel le premier dispositif de conversion de grandeurs asservies (19) détermine à partir des grandeurs asservies (12, 13) des grandeurs de sortie (20, 21) qui sont amenées aux comparateurs (24, 25) en tant que premières grandeurs d'entrée.

10. Procédé selon l'une quelconque ou plusieurs des revendications 7 à 9, **caractérisé en ce que** des valeurs de consigne (16, 17) des grandeurs asservies sont amenées à un deuxième dispositif de conversion de grandeurs asservies (18) en tant que grandeurs d'entrée, dans lequel le deuxième dispositif de conversion de grandeurs asservies (18) détermine à partir des valeurs de consigne (16, 17) des grandeurs de sortie (22, 23) qui sont amenées aux comparateurs (24, 25) en tant que deuxièmes grandeurs d'entrée.

11. Procédé selon la revendication 9 ou 10, **caractérisé en ce que** les premières grandeurs d'entrée des comparateurs (24, 25) et les deuxièmes grandeurs d'entrée correspondantes desdits comparateurs sont compensées, et **en ce que** les écarts de réglage (26, 27) qui en résultent sont amenés aux asservisseurs (28, 29) en tant que grandeurs d'entrée.

12. Procédé d'asservissement d'un turbopropulseur, dans lequel, en tant que grandeurs asservies, une vitesse de rotation d'hélice (12) et une puissance d'hélice (13) sont asservies, dans lequel le turbopropulseur (11) se voit amener en tant que grandeurs de commande un angle de réglage de pale d'hélice (14) et un flux de combustible (15), dans lequel pour déterminer l'angle de réglage de pale d'hélice (14) et le flux de combustible (15), des grandeurs de sortie (30, 31) fournies par des asservisseurs (28, 29) sont amenées à un dispositif de conversion (32) en tant que grandeurs d'entrée et le dispositif de conversion (32) détermine à partir des grandeurs de sortie (30, 31) des asservisseurs (28, 29) l'angle de réglage de pale d'hélice (14) et le flux de combustible (15) en tant que grandeurs de commande, **caractérisé en ce que** dans le dispositif de conversion (32), les grandeurs de sortie (30, 31) des asservisseurs (28, 29) sont compensées entre elles et sont de plus superposées avec une composante de commande pilote dépendant de valeurs réelles.

**13.** Procédé selon la revendication 12 **caractérisé en ce que** la vitesse de rotation d'hélice (12) et la puissance d'hélice (13) sont amenées en tant que grandeurs asservies du turbopropulseur (11) à un premier dispositif de conversion de grandeurs asservies (19) en tant que grandeurs d'entrée, dans lequel le premier dispositif de conversion de grandeurs asservies (19) fournit en tant que grandeurs de sortie des valeurs réelles pour la vitesse de rotation d'hélice (20) et une puissance de turbine (21).

**14.** Procédé selon la revendication 12 ou 13, **caractérisé en ce que** des valeurs de consigne pour la vitesse de rotation d'hélice (16) et la puissance d'hélice (17) sont amenées à un deuxième dispositif de conversion de grandeurs asservies (18) en tant que grandeurs d'entrée, dans lequel le deuxième dispositif de conversion de grandeurs asservies (18) fournit en tant que grandeurs de sortie des valeurs de consigne pour la vitesse de rotation d'hélice (22) et une puissance de turbine (23).

**15.** Procédé selon la revendication 13 ou 14, **caractérisé en ce qu'**à partir des valeurs réelles et des valeurs de consigne correspondantes, pour la vitesse de rotation d'hélice et la puissance de turbine, des écarts de réglage (26, 27) correspondants sont déterminés, dans lequel l'écart de réglage de la vitesse de rotation d'hélice (26) est amené à un asservisseur de vitesse de rotation (28) et l'écart de réglage de puissance de turbine (27) est amené à un asservisseur de puissance (29).

**16.** Procédé selon la revendication 15, **caractérisé en ce que** l'asservisseur de vitesse de rotation (28) fournit en tant que grandeur de sortie une demande de couple (30) et l'asservisseur de puissance (29) fournit en tant que grandeur de sortie une demande de puissance de turbine (31), dans lequel dans le dispositif de conversion (32), à partir de la demande de couple (30) et de la demande de puissance de turbine (31), l'angle de réglage de pale d'hélice (14) et le flux de combustible (15) sont déterminés.

Fig. 1

EP 1 550 015 B1

13

**EP 1 550 015 B1**

## IN DER BESCHREIBUNG AUFGEFÜHRTE DOKUMENTE

**In der Beschreibung aufgeführte Patentdokumente**

- US 54403074 B

**In der Beschreibung aufgeführte Nicht-Patentliteratur**

- **WADE, HAROLD L.** Inverted Decoupling: A Neglected Technique. *Advances In Instrumentation And Control, Instrument Society of America,* 1996, vol. 51, 357-369

- Querprofilregelung in der Papierindustrie - Sensoren und Aktuatoren als bestimmende Elemente der Regelgüte. **GRÄSER, AXEL.** Automatisierungstechnik. Oldenbourg Verlag, 1997, vol. 45, 271-281